# EUROPEAN PATENT SPECIFICATION

(11) **EP 1 333 531 B1**
(45) Date of publication and mention of the grant of the patent: **15.08.2007**
(21) Application number: 02002319.8
(22) Date of filing: 31.01.2002
(51) Int. Cl.: H01R 12/08, H01R 13/645

(54) **Low height usb interface connecting device and a memory storage apparatus thereof**
Steckverbinder geringer Höhe für eine USB-Schnittstelle und dazugehöriges Speichergerät
Connecteur à hauteur réduite pour une interface USB et unité de mémoire correspondante

(43) Date of publication of application: 06.08.2003
(73) Proprietor: POWER QUOTIENT INTERNATIONAL CO., LTD., Chung Ho City, Taipei Hsien (TW)
(72) Inventor: Yen, Sheng Shun, Taipei (TW)
(74) Representative: Helms, Joachim

(56) References cited:
- US-A- 5 658 170
- US-A- 6 086 430
- US-B1- 6 334 793

## Description

### BACKGROUND OF THE INVENTION

### 1. Field of The Invention:

The present invention relates to a low height USB interface connecting device and a memory storage apparatus thereof.

### 2. Description of Related Art:

Currently, a great variety of memory cards are available for electronic products and even if same type products are made from different designs, the memory card in the respective product is different from each other. Although it is so, the various memory cards have a common feature that the digital data in the memory cards can be transmitted to the computer for data processing.

In order to be capable of reading data in the memory cards, various card readers are provided to adapt different memory cards such as a compact flash card, a SD card, a MMC card and etc. before the data can be processed with the computer. But, the arrangement makes the user inconvenient. Of course, a type of card reader is capable of supporting more specifications of memory cards but it is expensive to give a great financial burden to the user.
The US patent US-A-6086430 describes a plug with a standard USB shielded plug housing mating with a receptacle for making a physical and electrical connection. The electrical connection is made by contacts communicating standard USB signalling.

### SUMMARY OF THE INVENTION

The USB interface is most widely applied for data transmission between a computer and a card reader among a lot of computer periphery interfaces so that an object of the present invention is to provide a memory card with a function of USB interface card reader, that is, the memory card can be inserted into a USB slot socket to execute a signal change and connection with the computer without the need of a USB interface card reader.

I n order to reach the preceding object, a connecting device with a low thickness is defined in claim 1. The connecting device is compatible with and inserted into a USB slot socket in spite of being not in accordance with the industrial standard for a USB connector. Because various memory cards available provide a very thin thickness respectively, the standard USB interface connector provides a too much high thickness to be built up with a memory card. This is a reason that the standard USB connector is revised in the present invention according claims 1,6,7,8,10,and 15.

### BRIEF DESCRIPTION OF THE DRAWINGS

The present invention can be more fully understood by reference to the following description and accompanying drawings, in which:
Fig. 1 is a perspective view illustrating a conventional USB connector (left side) and an inserted socket (right side);
Fig. 2 is a perspective view of a low height USB connector according to the present invention;
Fig. 3 is a block diagram of circuit for dual interface memory card device with low height USB connector of the present invention;
Fig. 4 is a perspective view illustrating an embodiment of the dual interface memory card with low height USB connector of the present invention;
Fig. 5 is a perspective view illustrating an embodiment of the USB interface memory card with low height USB connector of the present invention;
Fig. 6 illustrates a disassembled perspective view and an assembled perspective view of a planar electrode contact without USB connector according to the present invention;
Fig. 7 is a system block diagram of a planar electrode contact without USB connector of USB interface memory card according to the present invention;
Fig. 8 is a perspective view of a planar electrode contact without USB connector of USB interface memory card according to the present invention;
Fig. 9 is a system block diagram of a dual interface memory card with a planar electrode contact without USB connector according to the present invention;
Fig. 10 is a lateral sectional view of the dual interface memory card with a planar electrode contact without USB connector of the present invention;
Fig. 11 is a disassembled perspective view of the dual interface memory card of the present invention;
Fig. 12 is a top view of the dual interface memory card of the present invention;
Fig. 13 is a bottom view of the dual interface memory card of the present invention;
Fig. 14 is a perspective view of the dual interface memory card of the present invention illustrating a cover guard being attached to the memory card;
Fig. 15 is a schematic diagram illustrating a framework of interface signal according to the present invention; and
Fig. 16 is a circuit diagram based on the framework of interface signal.

### DETAILED DESCRIPTION OF THE PREFERRED EMBODIMENTS

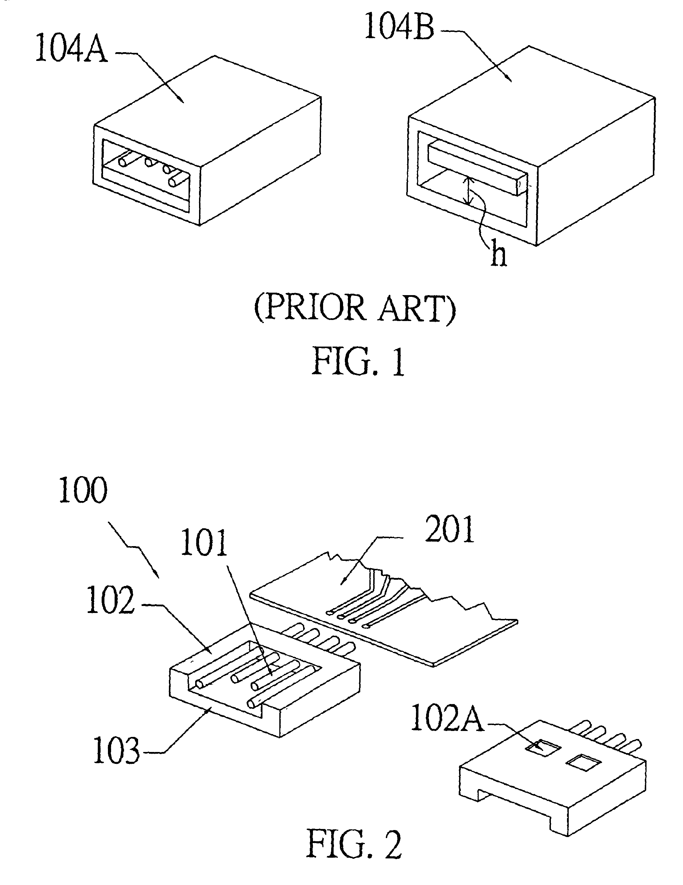

Referring to Fig. 1, in order to explain the principle of the present invention in detail, a traditional USB interface connector is described first. It can be seen in Fig. 1 that a plug of the connector end is at the left side and a slot socket of the host end is at the right side. Wherein, the reference numbers 104A and 104B are designated as a casing of the plug and a casing of the slot socket for shielding electronic signals.

Referring to Fig. 2, a USB low height connector 100 according to the present invention comprises a metal terminal 101, two jut pieces 102 and a connector part 103. The metal terminal 101 is composed of a plurality of metal sheets, which are the same as the metal sheets in the standard USB interface connector regardless in number, distance and size. The connector part 103 is different from the standard USB interface connector in that at both lateral sides of the connector part 103 are fixedly attached with the jut pieces 102 respectively or integrally extend the jut pieces 102 respectively. The connector part 103 is provided with a thickness same as the height of the inner space in the standard USB interface slot socket ("h" in Fig. 1) such that the connector part 103 can be inserted into the slot socket so as to transmit the signal. The respective jut piece 102 is used for preventing an incorrect signal connection resulting from the connector part 103 being inserted into the slot socket inversely so that the entire connector has a height much lower than the height of the standard USB connector. Besides, the connector part 103 can provide an external recess (102A in Fig.2) to reinforce an engaging strength thereof during being inserted into the standard USB interface, like standard USB connector, and the connector 100 can be associated with a print circuit board 201 by way of soldering directly such that a state of close circuit can be obtained.

Comparing to Fig. 1, it can be seen in Fig. 2 that the connector 100 of the present invention does not provide the casing 104A shown in Fig. 1 so that the thickness of the connector 100 can be reduced greatly. Originally, the casing 104A is provided for shielding and decreasing an effect of signal delay generating from the USB cable, Because the connector 100 is located on the memory card, no traditional USB cable is needed, the casing, which has the function for insulating the shielding signal, can be removed from the connector part 103 of the present invention. Hence, the USB interface connector can be flattened and the USB interface product can be developed toward a trend of card shaped type. A further explanation will be described hereinafter.

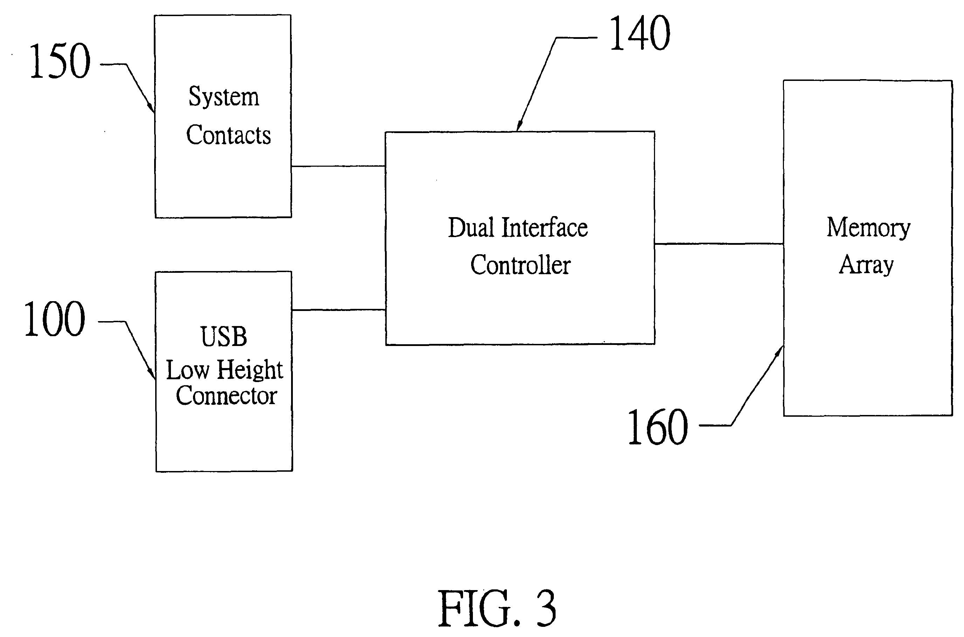

Referring to Fig. 3, a block diagram of circuit in the dual interface memory card device disclosed in the present invention is illustrated. It can be seen that the memory card has two digital data transmission interfaces, an application system interface and a USB interface. The data is saved in an internal memory 160 after the data is transmitted to the memory card from the applied system via the system connector 150. Once the memory card is taken out from the applied system, the previous designed USB low height connector 100 can be used for connecting with the USB interface of the computer main unit. That is, as soon as the memory card is inserted into the USB slot socket of the computer, the data is possible to transmit to the computer main unit without via the USB lead wire and the USB interface card reader. Wherein, a dual interface controller 140 provides a function of related applied system interfaces changing to the USB interface.

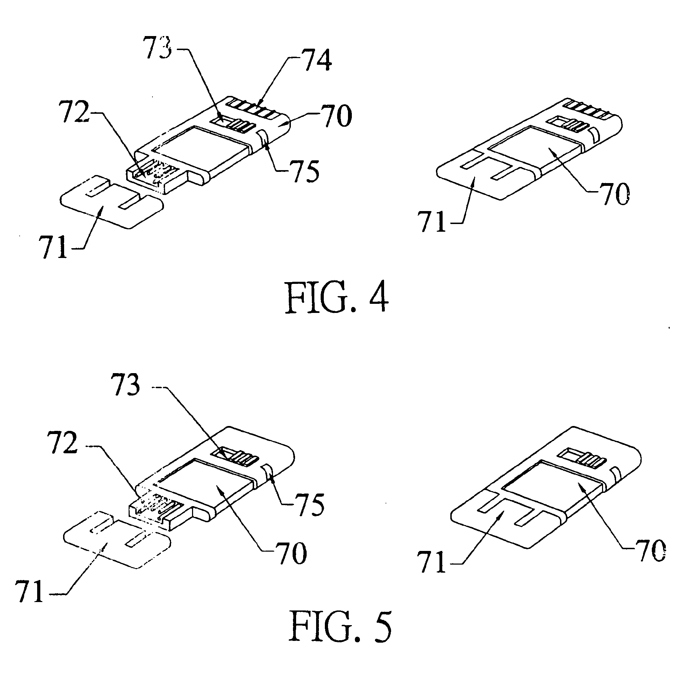

Referring to Fig. 4, one of typical examples of the dual interface memory card according to the present invention in practice is illustrated. It can be seen that a memory card 70 attached with a cover guard 71 provides the same size as an ordinary memory card capable of being used in an applied system. In case of the memory card 70 being taken out from the system, the exposed connector 72 can be inserted into the USB interface slot socket as long as the cover guard 71 is detached. It is pretty convenient while in use.

Accordingly, the preceding low height connector can be utilized to guide the USB signal to and to write data into the memory card directly and vice versa. In this way, a memory card with two different interface connectors is completed. Meanwhile, a read only switch 73 and a signal light 75 is placed at the external part of the memory card for data security. When the switch 73 is shifted to the read only mode, the memory card only offers a function of data read so that it is not possible to write the data into the memory card. Once the switch 73 is shifted to the normal mode, the memory card can be used normally with a function of read and write and the signal light 75 is used to indicate the working status of the USB device.

In order to simplify the entire system further and the application system interface being deleted, the USB interface system can be remained unchanged and the low height connector can be made as a super thin USB interface memory card as shown in Fig. 5. It can be seen that the USB interface memory card shown in Fig. 5 is provided with a lighter, thinner, shorter and smaller size in contrast to a memory device with current standard USB interface connector. It means the traditional USB interface memory device can be flattened in shape by way of the technique disclosed in the present invention so that it can be an innovative product design.

Referring to Fig. 2 again, the signal may enter the memory storage apparatus after passing through the metal terminal 101 of the connector 100 by way of the terminal 101 being soldered to metal conductive pads of the printed circuit board 201. It is known that soldered joints on the circuit may result in a change of impedance of transmission line to influence the high-speed transmission for data. Hence, how to remove the soldered joints is another object of the present invention. A way to eliminate the soldered joints can be done by way of the signal touching the metal conductive pieces of the printed circuit board in the memory storage apparatus via the USB terminal of the main unit instead of using a connector. This is a design concept of so-called golden finger recognized by the makers, that is, the direct contact is used instead of the connector for circuit connection to enhance the electronic feature of the memory storage apparatus during performing high-speed transmission.

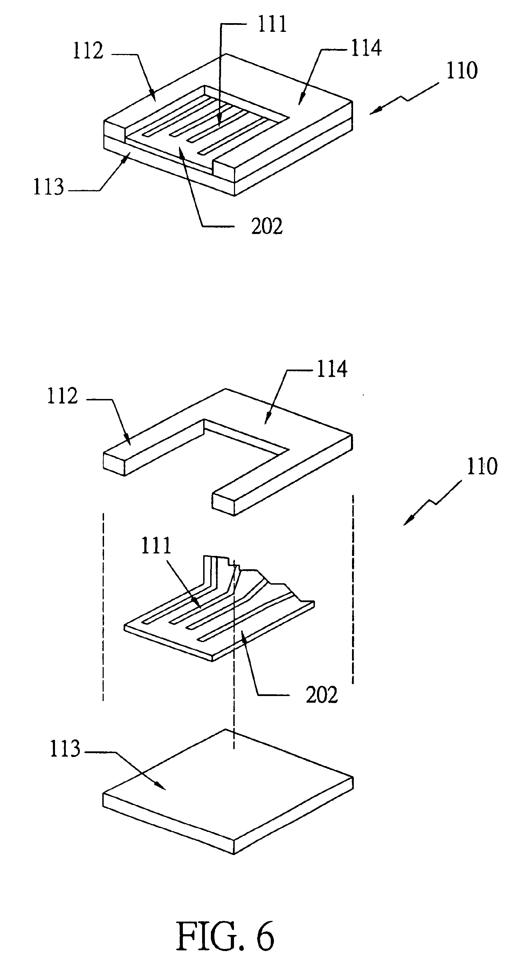

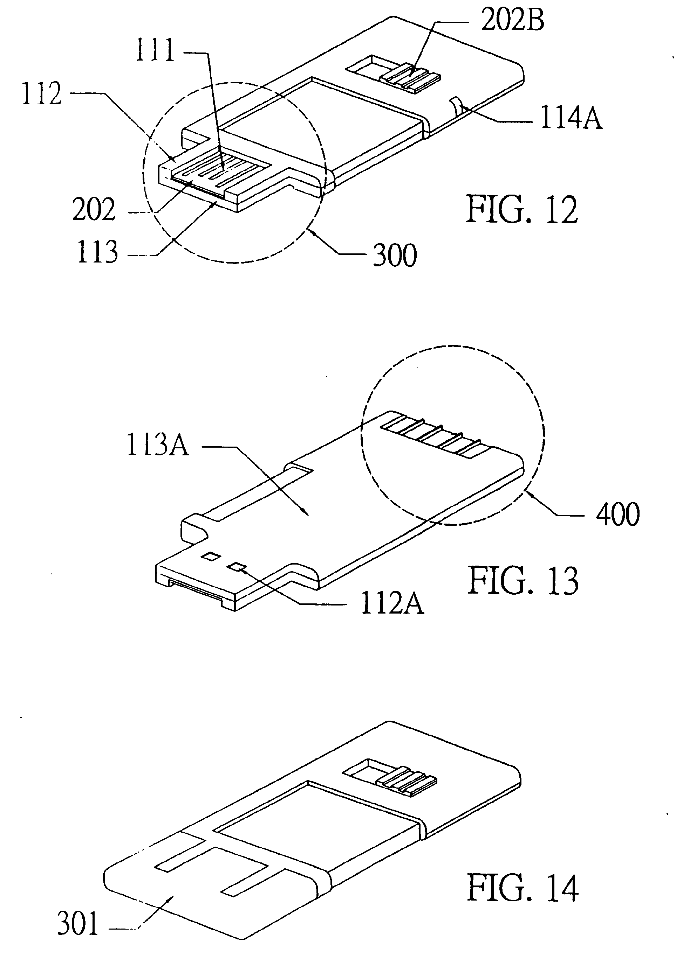

Referring to Fig. 6, a principle of design with no connector is illustrated further. A planar electrode contact without USB connector 110 with a USB contact end is shown in Fig. 6 and the entire height of the connector 110 can be received in the USB slot socket of the main unit after a printed circuit board 202 being associated with a base 113 and the fool proof jut piece 112 is integral with the casing 114 and disposed at two opposite lateral sides of the printed circuit board 202. The metal connective pieces 111 laid out on the printed circuit board 202 are utilized to replace the metal terminal 101 shown in Fig. 2. Hence, once the preceding connector is assembled, it provides a function same as the connector shown in Fig. 2 so that the planar electrode contact 110 can be used instead of the traditional USB connector and deficiency generated from the soldered joints on the circuit can be eliminated completely. In addition, the process for setting up the product during production operation can be simplified substantially. Besides, the base 113 can also provide an external recess (112A in Fig. 13) to reinforce an engaging strength thereof during being inserted into the standard USB interface, like standard USB connector

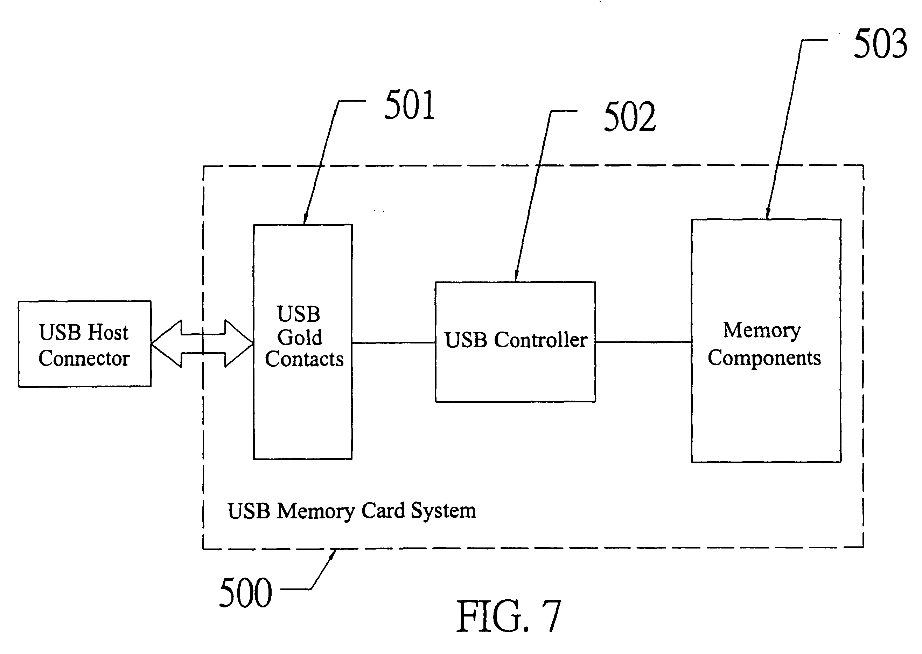

Referring to Fig. 7, a system block diagram of the USB memory card system according to the present invention is illustrated. The system 500 comprises a printed circuit board with USB gold contacts 501, a USB controller 502 and a memory components array 503. As the foregoing, the signal in the storage apparatus dose not pass through the connector and the soldered joints any more and connects with USB metal terminal of the host connector to form a close circuit.

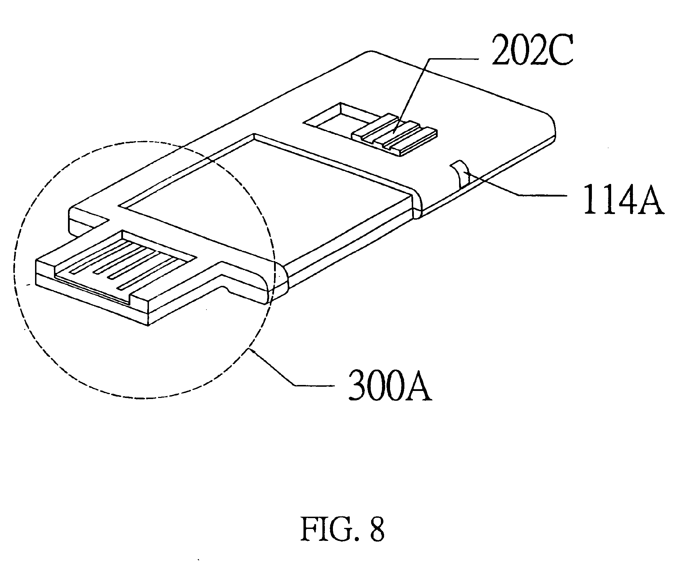

Referring to Fig. 8, a USB interface data storage apparatus with a USB interface planar electrode contact, which is disclosed in the present invention, is illustrated. The thickness of the memory storage apparatus shown in Fig. 8 has greatly reduced and it effectively enhances the portability with more facility. The planar electrode contact without USB connector 300A is formed by way of the same principle of design as shown in Fig. 6. A signal light 114A is arranged on the memory card for indicating the working status of the storage apparatus. A read only switch 202C is provided to prevent the data from being covered or deleted accidentally so that the security for data can be enhanced effectively.

From the preceding method, a new USB storage apparatus is disclosed further and the new USB memory storage apparatus not only provides a much lower height than that used in the conventional USB connector but also does not need the connector to reduce extra soldered joints.

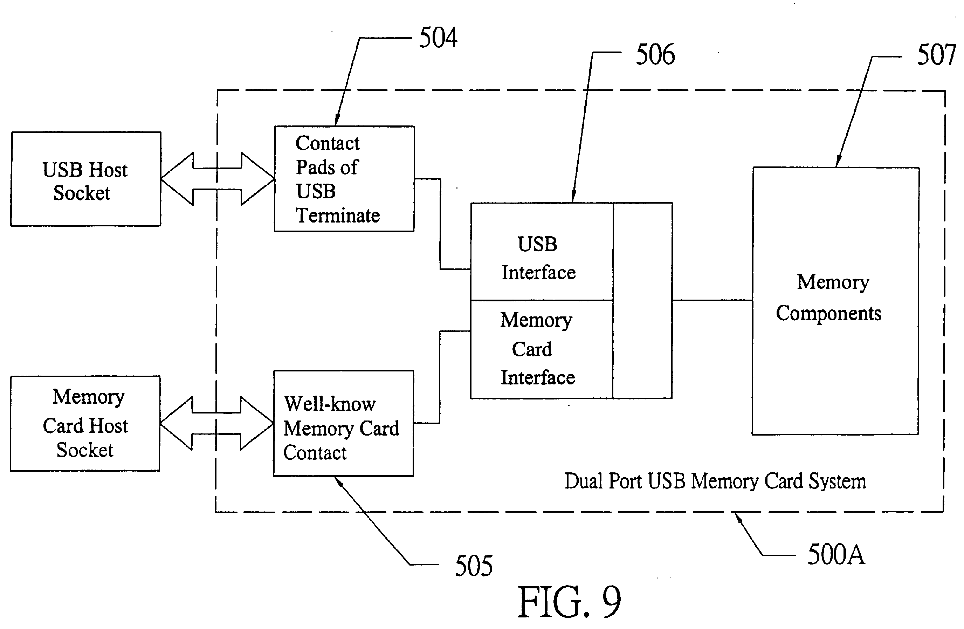

Furthermore, the USB interface planar electrode contact disclosed in the present invention can be mounted to various currently used memory storage apparatus to lower down the height of the standard USB connector part such that it is capable of being developed a novel storage apparatus with two different interface connectors. The novel storage apparatus with two different connectors will be described further hereinafter. Referring to Fig. 9, a system block diagram for a memory storage apparatus with the preceding USB interface connector such as a memory stick card, a SD card, etc. and with an application system. Wherein, the system 500A comprises a preceding USB planar electrode contact 504, a connector 505 for a conventional application system, a controller 506 with dual interface signal switch for changing data to USB signal and application interface signal and a group of memory array 507.

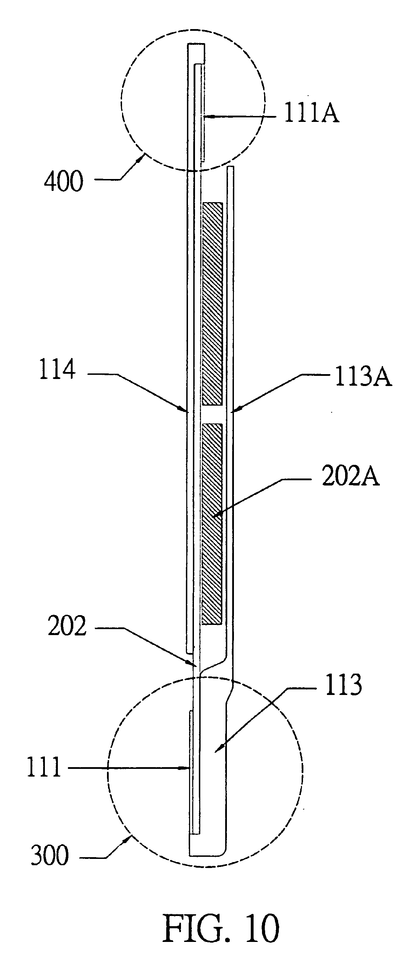

In order to explain a real design of the block diagram illustrated in Fig. 9, the memory stick card is taken as an example for the system design and the design method disclosed hereinafter also can be applied to other memory storage apparatus as long as a framework can be arranged properly. Referring to Fig. 10, it can be seen from the sectional view of the memory stick card that there is a USB signal contact end 300 provided for reading and writing USB signal and there is an interface end 400 of the memory stick card (application system) provided with different specifications depending on different memory cards. That is, the memory storage apparatus is capable of having two different interface ends, a USB interface end and an application interface end, wherein, the USB interface end acts as an interface for being connected to the host end signal and the application interface end such as MMC, SD, ..., and etc. for connecting signal between the device and the application system.

When the memory storage apparatus shown in Fig. 10 has performed the job thereof in the application system of the memory stick card and is taken out from the system, a USB interface connector 300 at another end thereof can send data to the computer via the USB interface. The USB interface connector 300 can be inserted into host USB slot socket so that it is not necessary to carry out the data transmission via a card reader. A printed circuit board 202 on the surface thereof bears circuit components 202A and the casings 114 and 113A enclose the printed circuit board 202. Gold contacts 111, 111 A are arranged on the printed circuit board 202 and form as a USB contact conductor and a contact conductor of the memory stick card.

It is summarized from the preceding description that the present invention discloses how to reduce the height of the USB connector in Fig. 2 for being capable of applying to the existing memory card and further discloses how to remove the connector for decreasing the number of soldered joints on the circuit and enhancing the performance of the circuit with a moderate reluctance under high speed signal transmission.

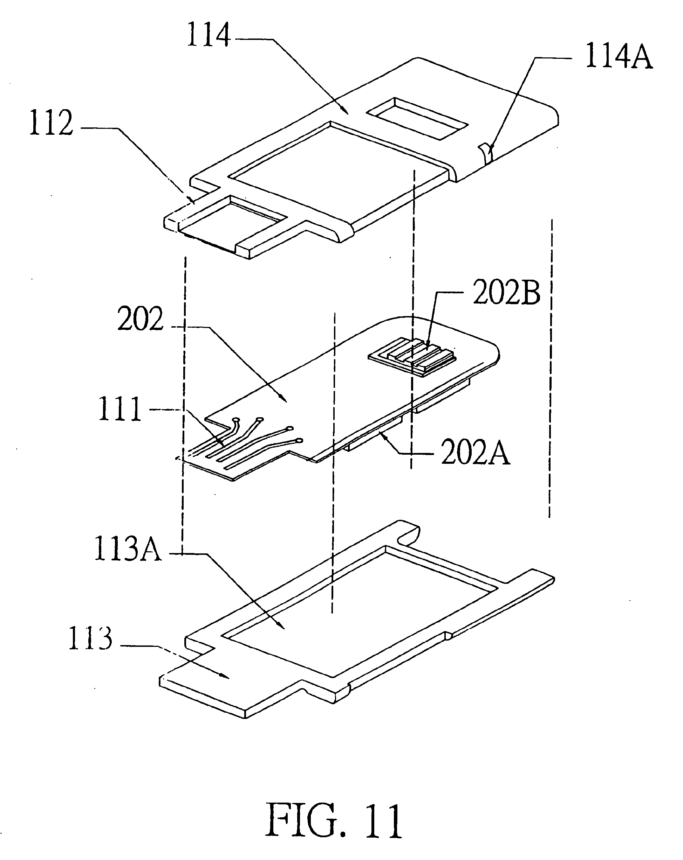

Referring to Fig. 11, it can be seen from the disassembled perspective view that the memory storage apparatus, for instance, the memory stick card, provides a printed circuit board 202 and two casings 114 and 113A. It is learned from the block diagram in Fig. 9 and the disassembled perspective view that the USB interface connector is not included in the memory storage apparatus of the present invention any more, and a signal light 114A can be fixedly attached to the casing 114 to indicate the work status of the memory storage apparatus as the preceding embodiment does. In addition, a read only switch 202B is arranged on the memory storage apparatus to prevent the data from being written, covered or deleted in case of the read only switch 202B being shifted to a proper mode. Referring to Figs. 12 and 13, it can be learned from the top view and the bottom view of the memory storage apparatus that two different interface contacts 300, 400 are provided and the interface contact 300 is a USB interface contact arranged on the memory card in accordance with the design way disclosed in the present invention so that it allows the memory card to keep the feature of low height. Further, a cover guard can be added to protect parts of the USB contact. Fig. 14 shows a movable cover guard 301, which may be detachable or fixedly attached to connector.

As the foregoing, if the interface at the application system end is removed and the USB interface remains unchanged, a memory storage apparatus with USB interface only can be formed. Comparing to a memory storage apparatus with conventional USB interface, the memory storage apparatus according to the present invention is much thinner, lighter shorter and smaller in size for being carried about easily. Therefore, it is hardly said the present invention is not a novel, creative and advanced invention.

The planar electrode contact USB connecting device disclosed in the present invention provides no connector and has to satisfy portability especially in practice so that it is necessary to consider a time difference between the work status of the interface controller and the work status displayed by the system, that is, it is possible to cause a time difference between the work status displayed by the system and the work status of the real device. This is a point has to be confirmed strictly for the design of detachably portable device, otherwise, it is very likely to mislead the user due to individual different system design such that the device is detached accidentally before completing the job thereof to result in the data in device being damaged.

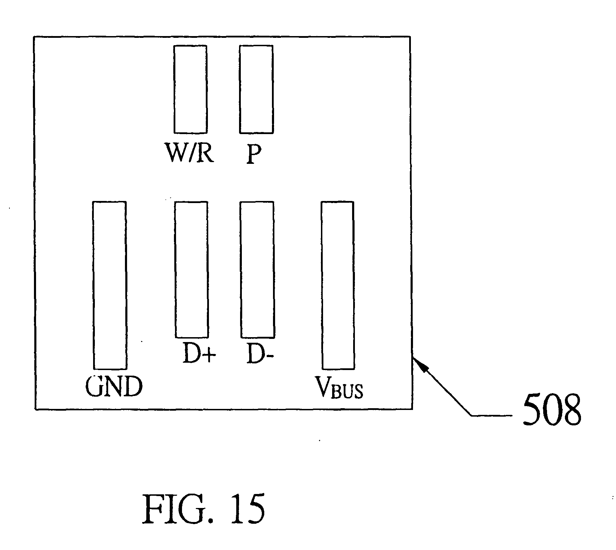

However, the standard USB interface signal is not sufficient to offer a solution so that a new interface signal is designed in the present invention to solve the preceding problem thoroughly. Referring to Fig. 15, an interface signal framework 508 (corresponding to the circuit board 202 in Fig. 6) comprises a power supply (V_{bus}) for offering a working voltage, a signal group including a D+ and a D-signals, a ground signal (power GND) to constitute a standard USB interface signal group. The difference of the present invention from the conventional USB interface signal is that an apparatus work signal group is provided additionally. The work signal group supplies a work signal for indicating the work status of the apparatus and the D+ and D- signals are data signals in accordance with the specification of the standard USB interface. The apparatus work signal group is supplied by the apparatus end connects with the controller of the apparatus end by way of a necessary circuit.

Wherein, the power supply (V_{bus}) can support 5 volts, 3.3 volts, 2.5 volts and 1.8 volts so that it is possible for the power supply to offer a working voltage in different specifications. The apparatus working signal group includes a work signal W/R and a power providing signal P. In case of the device being designed as a memory storage apparatus such as the USB memory card, the work signal W/R indicates if there is any data being transmitted on the interface (read/write). In case of the device being input/out apparatus such as a USB network card, the work signal W/R indicates if there is any data being transmitted on the interface (upload/download).

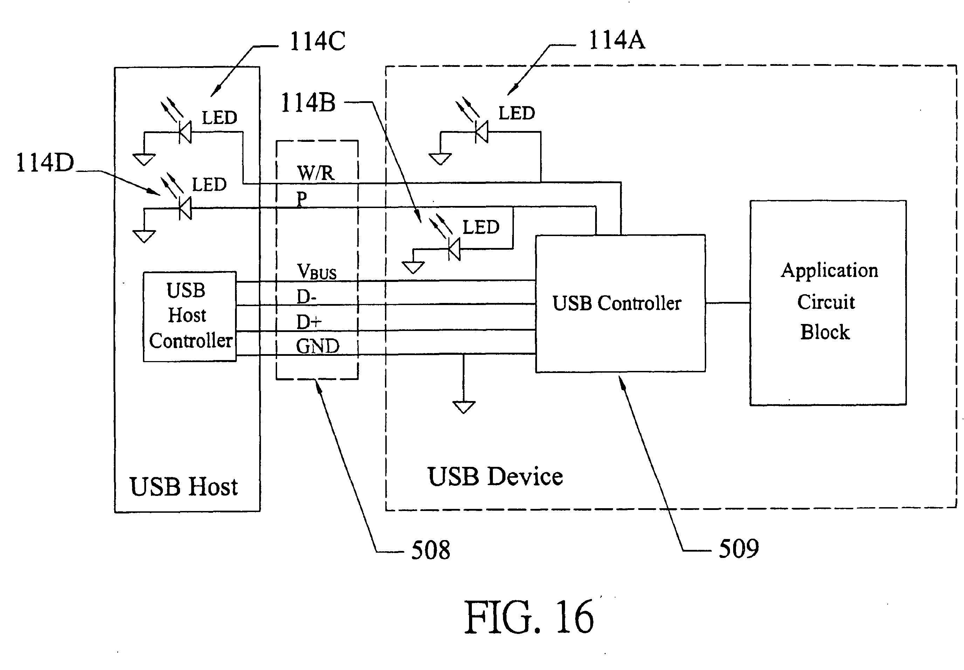

Referring to Fig. 16, a circuit diagram with an interface signal framework is illustrated. The W/R work signal is supplied by an interface controller 509 and as soon as the data is transmitted on the USB interface, a signal light such as LED arranged at the external part of the device can be triggered via the W/R signal. Hence, the user can confirm the actual work status of the interface controller through an external signal light 114C to prevent the device from being removed from the system accidentally.

When the device is used for the standard USB interface slot socket, the standard USB interface does not support W/R signal so that the device itself has to have a data signal light. Meanwhile, the W/R signal can trigger a signal light 114A arranged in the device. By the same token, the power providing signal P provides the same principle of being actuated. Referring to Fig. 16 again, as soon as the USB interface is inserted, the interface controller 509 can offer a power providing signal P to trigger a signal light 114D arranged on the host. The signal light 114D is used for indicating if the device is in a state of electricity consuming work or in a state of electricity consuming alert. Similarly, the providing signal P can also trigger the power signal light 114B arranged in the device.

## Claims

1. A connecting device (100; 110; 300A) with low profile, comprising:
a connector part (103; 72; 113), having a height compatible with the distance (h) between the receptacle contact and bottom of a USB connector slot in which the connector part (103; 72; 113) is to be inserted;
a set of metal terminals (101:111), being arranged on the connector part (103; 72; 113), each terminal having a first end being disposed in the connector part and a second end extending outward the connector part (103; 72; 113);
whereby the first end of metal terminal assembly contacts with internal electronic signal of the standard USB interface slot socket and the respective second end is connected to a printed circuit board or a signal connecting lines (111)
**characterized by**
the first end of metal terminal is exposed to the surface of the connecting device (100; 110; 300A) without any casing so that the thickness of the connecting device is reduced, and to be able to connect the host signals and the connecting device can be inserted into a standard USB receptacle.

2. The connecting device (100; 110; 300A) with low profile according to claim 1, wherein it further comprises a set of jut pieces (102; 112) which are fixedly attached to both lateral sides of the connector part (103; 72; 113) for preventing the connecting device from being inserted into the slot socket in an incorrect direction.

3. The connecting device (100; 110; 300A) with low profile according to claim 1, wherein said set of metal terminal (101) is formed by the layout of a printed circuit board (202) and said height is composed of said printed circuit board (202) and the case of said connector part (103; 72; 113), wherein, said set of metal terminal (101) further provides four independent and disconnecting gold contacts for connecting with the electronic signals.

4. The connecting device (100; 110; 300A) with low profile according to claim 1, wherein said connector part (103; 72; 113) further provides an external recess (102A; 112A) to reinforce an engaging strength thereof during being inserted into the standard USB interface.

5. A low profile USB interface memory storage apparatus (70; 500), comprising:
a connecting device (100; 110; 300A), according to one of the preceding claims;
a casing (113; 114), receiving and bearing following components;
a printed circuit board (202), being arranged in the casing (113; 114), providing a layout of lead wire circuit;
a memory array (503), at least comprising a memory component as a data storage apparatus; and
a controller (502), being disposed in the casing (113A; 114), being provided with a layout of required circuit for completing transmission and transformation between a USB interface signal and data signal and saving data into the memory array (503);
wherein said connecting device (100; 110; 300A) provides a connecting joint to connect with said printed circuit board (202).

6. A dual interface memory storage apparatus (70; 500), comprising:
a connecting device (100; 110; 300A), according to one of the claims 1 to 4;
a casing (113A; 114), receiving and bearing following components;
a printed circuit board (202), being arranged in the casing (113A; 114) and having a circuit layout of lead wires;
a memory array (160; 507), at least comprising a memory component and acting as a data saving device; and
a dual interface controller (140; 506), changing data saved in an internal memory of being disposed in the casing (113A; 114) being provided with a required circuit for completing transmission and transformation between USB interface signal and data signal and saving data into the memory array (160; 507);
a further connecting device (400), exposing outward the casing (113A; 114), providing wires to connect with the printed circuit board (202), having an external pin holes or connecting pins for engaging with a slot socket of a first system;
wherein said connecting device (100; 110; 300A), exposing outward the casing, providing joints to connect with said printed circuit board (202), having pin holes or connecting pins to engage with a slot socket of a second system.

7. An electronic signal connecting device for being inserted into a USB connector slot socket, comprising:
a connecting device (100; 110; 300A), according to one of the claims 1 to 4;
a printed circuit board (202), providing a USB signal circuit layout thereon;
a casing (113A; 114), providing a dimension for being associated with the printed circuit (202); and
a set of metal lead wires (111), being laid and formed on the circuit board (202), and exposing outward the connecting device (100; 110; 300A) after said printed circuit board (102) being associated with said casing (113A; 114).

8. The electronic signal connecting device according to claim 7, wherein said set of metal lead wires (111) further comprises a set of parallel metal lead wires and the width of each of said lead wires and the clearance between any two adjacent lead wires are in accordance with the specification of a USB interface terminal.

9. A memory storage apparatus (500) without USB interface connector, which can be inserted into a USB connector slot socket or an interface socket which has a set of USB signals, comprising:
a connecting device (100; 110; 300A), according to one of the claims 1 to 4;
a casing (113A; 114), receiving following electronic components, and having an opening;
a printed circuit board (202), providing a circuit layout with necessary lead wires and having a set of metal lead wires partly exposing outward said casing (113A; 114);
a memory array (503), at least comprising a memory component for saving data;
a USB controller (502; 509), changing data in said memory component into a signal in accordance with a USB interface specification and changing said USB signal into data so as be saved in said memory component, and connecting with said memory array (503) to form a circuit.

10. The memory storage apparatus (500) according to claim 9, wherein said connecting structure of said USB interface is said connecting device (100; 110; 300A) formed with the metal lead wire part of said printed circuit board (202).

11. The memory storage apparatus (500) according to claim 9 or 10, wherein said USB controller (509) supplies a signaling device for indicating a working status of said memory storage apparatus (500).

12. The memory storage apparatus (500) according to claim 11, wherein said signaling device comprises a read/write W/R or transmitting a signal indicating said working status of said memory storage apparatus (500).

13. The memory storage apparatus (500) according to claim 11 or 12, wherein said signaling device comprises a power providing signal P for indicating a status of power consumption.

14. A dual interface memory storage apparatus (70; 500A) without USB interface connector, which can be connected with the receptacle contact of a USB connector socket or an interface socket which has a set of USB signals, comprising:
a connecting device (100; 110; 300A), according to one of the claims 1 to 4;
a casing (113A; 114), receiving following electronic components, and having an opening;
a printed circuit board (202), providing a circuit layout with necessary lead wires and having a set of metal lead wire part exposing outward said casing (113A; 114);
a memory array (160; 503; 507), at least comprising a memory component for saving data;
a dual interface controller (140; 506), changing data in the memory component into a signal in accordance with a USB interface specification and changing said USB signal into data so as be saved in the memory component, and connecting with the set of memory array to form a circuit; and
a set of further connecting devices (400), other than said connecting device (100; 110; 300A).

15. The dual interface memory storage apparatus (70; 500A) according to claim 14, wherein said connecting device (100; 110; 300A) is formed with the metal lead wire part when the casing (113A; 114) is associated with said printed circuit board (202) to be inserted into a standard USB receptacle and protect the said dual interface controller and the said memory component.

16. The dual interface memory storage apparatus (70; 500A) according to claim 14, wherein a connecting device same as an existing memory card interface connector or connecting device is formed with said metal lead wire part when soon as said casing (113A; 114) is associated with said printed circuit board (202) to be insert into an existing memory card socket and protect the said dual interface controller and the said memory component.

17. The dual interface memory storage apparatus (70; 500A) according to claim 14, wherein a connector device same as an existing memory card is fixed to said printed circuit board (202) and exposes outside said dual interface memory storage apparatus (70; 500A).

18. The dual interface memory storage apparatus (70; 500A) according to claim 14 to 17, wherein said memory storage apparatus (70; 500A) is provided with a read only switch (73; 202C; 202B) or device located outside said apparatus externally for preventing the writing of data into said memory storage apparatus (70; 500A) when shifted to a proper mode.

19. The dual interface memory storage apparatus (70; 500A) according to claim 14 to 18, wherein a signal light (75; 114A) is mounted externally on said memory storage apparatus (70; 500A) for indicating a work status of said memory storage apparatus (70; 500A).

20. The dual interface memory storage apparatus (70; 500A) according to claim 14 to 19, wherein a detachable cover guard (71; 301) is provided to fit with and protect said metal terminals (101;111).

21. The memory storage apparatus (500) according to claim 9 to 13, wherein a detachable cover guard (71; 301) is provided to fit with and protect said metal terminals (101; 111).

## Patentansprüche

1. Steckverbinder (100; 110; 300A) geringer Höhe, umfassend
ein Verbinderteil (103; 72; 113) mit einer dem Abstand (h) zwischen dem Buchsenkontakt und dem Boden eines USB-Verbinderschlitzes, in dem das Verbinderteil einsetzbar ist,
einen an dem Verbinderteil (103; 72; 113) angeordneten Satz von Metallanschlüssen, wobei jeder Metallanschluss mit einem ersten Ende in dem Verbinderteil angeordnet ist, und sich ein zweites Ende aus dem Verbinderteil (103; 72; 113) erstreckt,
wobei das erste Ende der Metallanschlussanordnung mit dem internen elektronischen Signal des USB-Verbinderschlitzes und das entsprechende zweite Ende mit einer gedruckten Schaltungskarte oder einer Signalverbindungsleitung (111) verbunden ist,
**dadurch gekennzeichnet, dass**
das erste Ende des Metallanschlusses zur Oberfläche des Steckverbinders (100,110, 300A) ohne irgendein Gehäuse freiliegt, so dass die Dicke des Steckverbinders zur Verbindung der Hostsignale vermindert ist und der Steckverbinder in eine Standard USB-Buchse einsetzbar ist.

2. Steckverbinder (100; 110; 300A) nach Anspruch 1, wobei weiter ein Satz Vorsprünge (102, 112) vorgesehen ist, die an beiden seitlichen Seiten des Verbinderteiles (103; 72; 113) zur Vermeidung eines Einsetzens des Steckverbinders in die Schlitzbuchse in einer falschen Richtung angebracht sind.

3. Steckverbinder (100; 110; 300A) nach Anspruch 1, wobei der Satz der Metallanschlüsse (101) mittels der Auslegung einer gedruckten Schaltungskarte (202) ausgebildet ist, und die genannte Höhe sich aus der gedruckten Schaltungskarte und dem Gehäuse des Verbinderteils (103; 72; 113) zusammensetzt, wobei der Satz der Metallanschlüsse (101) weiter vier unabhängige und getrennte Goldkontakte zur Verbindung mit den elektronischen Signalen aufweist.

4. Steckverbinder (100; 110; 300A) nach Anspruch 1, wobei das Verbinderteil (103; 72; 113) weiter eine äußere Aussparung (102A; 112) zur Verstärkung seiner Eingriffsfestigkeit beim Einsetzen in die Standard USB-Schnittstelle aufweist.

5. Speichergerät für eine USB-Schnittstelle mit geringer Höhe (70,500) umfassend:
einen Steckverbinder (100; 110; 300A) gemäß den vorangegangenen Ansprüchen;
ein Gehäuse (113; 114) zur Aufnahme und zum Lagern folgender Komponenten:
eine in dem Gehäuse (113; 114) angeordnete gedruckte Schaltungskarte (202) zur Schaffung einer Auslegung eines Leitungsschaltkreises;
eine Speicheranordnung (503) mit mindestens einer Speicherkomponente als Datenspeichervorrichtung, und eine in dem Gehäuse (113A, 114) angeordnete Steuereinrichtung (502) mit einer Auslegung des erforderlichen Schaltkreises zur Vervollständigung der Übertragung und Umwandlung zwischen einem USB-Schnittstellensignal und einem Datensignal und zum Speichern der Daten in der Speicheranordnung (503);
wobei der Steckverbinder (100; 110; 300A) eine Verbindung mit der genannten gedruckten Schaltungskarte (202) schafft.

6. Duale Schnittstellenspeichervorrichtung (70; 500), umfassend:
einen Steckverbinder (100; 110; 300A) nach einem der Ansprüche 1 bis 4;
ein Gehäuse (113A; 114) zur Aufnahme und zum Lagern folgender Komponenten:
eine in dem Gehäuse (113A; 114) angeordnete gedruckte Schaltungskarte (202) mit einer Schaltkreisauslegung von Leitungsdrähten;
einer Speicheranordnung (160, 507) mit mindestens einer Speicherkomponente als Datenspeichereinrichtung; und
eine duale Schnittstellen-Steuereinrichtung (140; 506) zum Austausch von in einem internen Speicher in dem Gehäuse (113A, 114) gespeicherten Daten mit einem erforderlichen Schaltkreis zur Vervollständigung der Übertragung und Umwandlung zwischen dem USB-Schnittstellensignal und dem Datensignal und zum Speichern der Daten in der Speicheranordnung (160; 507);
einen weiteren sich aus dem Gehäuse (113A; 114) erstreckenden Steckverbinder (400) mit Drähten zur Verbindung mit der gedruckten Schaltungskarte (202), die äußere Stiftöffnungen oder Verbindungsstifte zum Eingriff mit einer Schlitzbuchse eines ersten Systems aufweist;
wobei der Steckverbinder (100; 110; 300A) sich aus dem Gehäuse erstreckt und Verbindungen zur Verbindung mit der gedruckten Schaltungskarte (202) schafft, die Stiftöffnungen oder Verbindungsstifte zum Eingriff mit einer Schlitzbuchse eines zweiten Systems aufweist.

7. Elektronische Signalverbindungseinrichtung zum Einsetzen in eine USB-Verbinderschlitzbuchse, umfassend:
einen Steckverbinder (100; 110; 300A) gemäß einem der Ansprüche 1 bis 4;
eine gedruckte Schaltungskarte (202) mit einer darauf ausgebildeten USB-Signalschaltkreisauslegung;
ein Gehäuse (113A; 114) mit einer der gedruckten Schaltung (202) zugeordneten Abmessung; und
einen Satz Metallleiterdrähte (111), die auf der Schaltungskarte liegen und ausgebildet sind und sich aus dem Steckverbinder (100, 110; 300A) erstrecken, nachdem die gedruckte Schaltungskarte (202) mit dem Gehäuse (113A; 114) verbunden ist.

8. Elektronische Signalverbindungseinrichtung nach Anspruch 7, wobei der Satz der Metallleiterdrähte (111) weiter einen Satz paralleler Metallleiterdrähte umfasst, und die Breite von jedem der Leiterdrähte und der Abstand zwischen irgendwelchen zwei benachbarten Leiterdrähten der Spezifikation eines USB-Schnittstellenanschlusses entspricht.

9. Speichervorrichtung (500) ohne USB-Schnittstellenverbinder, die in eine USB-Verbinderschlitzbuchse oder eine Schnittstellenbuchse mit einem Satz von USB-Signalen einsetzbar ist, umfassend:
einen Steckverbinder (100; 110; 300A) gemäß einem der Ansprüche 1 bis 4;
ein Gehäuse (113A; 114) zur Aufnahme folgender elektronischer Komponenten mit einer Öffnung;
eine gedruckte Schaltungskarte (202) mit einer Schaltkreisanordnung mit notwendigen Leiterdrähten und mit einem Satz von Metallleiterdrähten, die sich teilweise aus dem Gehäuse (113A; 114) erstrecken;
eine Speicheranordnung (503) mit mindestens einer Speicherkomponente zum Speichern von Daten;
eine USB-Steuereinrichtung (502; 509) zum Austausch von Daten in der Speicherkomponente in ein Signal entsprechend einer USB-Schnittstellenspezifikation und zum Austausch des genannten USB-Signals in in der Speicherkomponente zu speichernde Daten und zur Verbindung mit der Speicheranordnung (503) zur Bildung eines Schaltkreises.

10. Speichervorrichtung (500) nach Anspruch 9, wobei die Verbindungsstruktur der USB-Schnittstelle den mit dem Metallleiterdrahtteil der gedruckten Schaltungskarte (202) ausgebildeten Steckverbinder (100; 110; 300A) darstellt.

11. Speichervorrichtung (500) nach Anspruch 9 oder 10, wobei die USB-Steuereinrichtung (509) eine Signalisierungseinrichtung zur Anzeige eines Arbeitsstatus der Speichervorrichtung (500) schafft.

12. Speichervorrichtung (500) nach Anspruch 11, wobei die Signalisierungseinrichtung eine erste Lese/Schreib-W/R umfasst oder ein Signal zur Anzeige des Arbeitsstatus der Speichervorrichtung (500) überträgt.

13. Speichervorrichtung (500) nach Anspruch 11 oder 12, wobei die Signalisierungseinrichtung ein stromlieferndes Signal (P) zur Anzeige eines Stromverbrauchs umfasst.

14. Duale Schnittstellen-Speichervorrichtung (70; 500A) ohne einen USB-Schnittstellenverbinder, die mit dem Aufnahmekontakt einer USB-Verbinderbuchse oder einer Schnittstellenbuchse mit USB-Signalen verbindbar ist, umfassend:
einen Steckverbinder (100; 110; 300A) gemäß den Ansprüchen 1 bis 4;
ein Gehäuse (113A; 114) zur Aufnahme folgender elektronischer Komponenten und mit einer Öffnung;
eine gedruckte Schaltungskarte (202) mit einer Schaltkreisauslegung mit erforderlichen Leitungsdrähten und mit einem Satz von einem sich aus dem Gehäuse (113A; 114) erstreckenden Metallleitungsdrahtteil;
eine Speicheranordnung (160; 503; 507) mit mindestens einer Speicherkomponente zum Speichern von Daten;
einer dualen Schnittstellensteuereinrichtung (140; 506) zum Austausch von Daten in der Speicherkomponente in ein Signal entsprechend einer USB-Schnittstellenspezifikation und zum Austausch des USB-Signals in in der Speicherkomponente zu speichernde Daten und zum Verbinden mit dem Satz der Speicheranordnung zur Bildung eines Schaltkreises; und
einen Satz weiterer von dem Steckverbinder (100; 110; 300A) unterschiedlicher Verbindungseinrichtungen (400).

15. Duale Schnittstellen-Speichervorrichtung (70; 500A) nach Anspruch 14, wobei der Steckverbinder (100; 110; 300A) mit einem Metallleiterdrahtteil ausgebildet ist, wenn das Gehäuse (113A; 114) mit der gedruckten Schaltungskarte (202) zum Einsetzen in eine Standard USB-Aufnahme und zum Schutz der dualen Schnittstellensteuereinrichtung und der Speicherkomponenten verbunden ist.

16. Duale Schnittstellen-Speichervorrichtung (70; 500A) nach Anspruch 14, wobei eine gleiche Verbindereinrichtung wie eine bestehende Speicherkartenschnittstellenverbindereinrichtung oder eine Verbindereinrichtung mit dem genannten Metallleiterdrahtteil ausgebildet ist, sobald das Gehäuse (113A; 114) mit der genannten gedruckten Schaltungskarte (202) zum Einsetzen in eine bestehende Kartenbuchse und zum Schutz der dualen Schnittstellensteuereinrichtung und der Speicherkomponente verbunden ist.

17. Duale Schnittstellen-Speichervorrichtung (70; 500A) nach Anspruch 14, wobei ein gleicher Verbinder wie eine bestehende Speicherkarte an der gedruckten Schaltungskarte (202) befestigt ist und sich aus der dualen Schnittstellen-Speichervorrichtung (70; 500A) erstreckt.

18. Duale Schnittstellen-Speichervorrichtung (70; 500A) nach Anspruch 14 bis 17, wobei die Speichervorrichtung (70; 500A) mit einem Nur-Lese-Schalter (73, 202C; 202B) oder einer außerhalb der Vorrichtung angeordneten Einrichtung zum Verhindern des Einschreibens von Daten in die Speichervorrichtung (70; 500A), wenn sie in einen geeigneten Modus geschaltet wird, versehen ist.

19. Duale Schnittstellen-Speichervorrichtung (70; 500A) nach Anspruch 14 bis 18, wobei ein Signallicht (75; 114A) außen an der Speichervorrichtung (70; 500A) zur Anzeige eines Arbeitsstatus der Speichervorrichtung (70; 500A) befestigt ist.

20. Duale Schnittstellen-Speichervorrichtung (70; 500A) nach Anspruch 14 bis 19, wobei ein lösbarer Schutzdeckel (71; 301) entsprechend den Metallanschlüssen (101; 111) und zu deren Schutz vorgesehen ist.

21. Speichervorrichtung (500) nach den Ansprüchen 9 bis 13, wobei ein lösbarer Schutzdeckel (71; 301) entsprechend den Metallanschlüssen (101; 111) und zu deren Schutz vorgesehen ist.

## Revendications

1. Dispositif de connexion (100 ; 110 ; 300A) extra plat, comprenant :
une partie de connecteur (103 ; 72 ; 113), ayant une hauteur compatible avec la distance (h) entre le contact de la prise et le fond d'une fente de connecteur USB dans laquelle la partie de connecteur (103 ; 72 ; 113) doit être insérée ;
un ensemble de bornes métalliques (101 ; 111), étant agencé sur la partie de connecteur (103 ; 72 ; 113), chaque borne ayant une première extrémité étant disposée dans la partie de connecteur et une seconde extrémité s'étendant vers l'extérieur de la partie de connecteur (103 ; 72 ; 113) ;
ce qui entraîne que la première extrémité de l'ensemble de bornes métalliques est en contact avec le signal électronique interne de la fente de la prise d'interface USB standard et la seconde extrémité respective est connectée à une carte de circuit imprimé ou une ligne de connexion de signal (111)
**caractérisé en ce que**
la première extrémité de la borne métallique est exposée à la surface du dispositif de connexion (100 ; 110; 300A), sans aucun boîtier de telle sorte que l'épaisseur du dispositif de connexion est réduite, et pour être capable de connecter les signaux hôtes et le dispositif de connexion peut être inséré dans une prise USB standard.

2. Dispositif de connexion (100 ; 110 ; 300A) extra plat selon la revendication 1, dans lequel il comprend en outre un ensemble de pièces en saillie (102 ; 112) qui sont reliées de manière fixe aux deux côtés latéraux de la partie de connecteur (103 ; 72 ; 113) pour éviter que le dispositif de connexion ne soit inséré dans la fente de la prise dans une direction incorrecte.

3. Dispositif de connexion (100 ; 110 ; 300A) extra plat selon la revendication 1, dans lequel ledit ensemble de bornes métalliques (101) est formé par la configuration d'une carte de circuit imprimé (202) et ladite hauteur est composée de ladite carte de circuit imprimé (202) et du logement de ladite partie de connecteur (103 ; 72 ; 113), dans lequel, ledit ensemble de bornes métalliques (101) produit en outre quatre contacts en or indépendants et de déconnexion pour une connexion avec les signaux électriques.

4. Dispositif de connexion (100 ; 110 ; 300A) extra plat selon la revendication 1, dans lequel ladite partie de connecteur (103 ; 72 ; 113) fournit en outre un renfoncement externe (102A ; 112A) afin de renforcer une force d'engagement de celui-ci pendant l'insertion dans l'interface USB standard.

5. Appareil de stockage de mémoire d'interface USB extra plat (70 ; 500), comprenant :
un dispositif de connexion (100; 110; 300A) selon l'une des revendication précédentes ;
un boîtier (113 ; 114) recevant et portant les composants suivants ;
une carte de circuit imprimé (202), étant agencée dans le boîtier (113 ; 114), produisant une configuration d'un circuit de fils conducteurs ;
une matrice mémoire (503) comprenant au moins un composant de mémoire comme un appareil de stockage de données ; et
un contrôleur (502), étant disposé dans le boîtier (113A ; 114), étant prévu avec une configuration de circuit appropriée pour effectuer une transmission et une transformation entre un signal d'interface USB et un signal de données et sauvegardant des données dans la matrice mémoire (503) ;
dans lequel ledit dispositif de connexion (100 ; 110 ; 300A) fournit un joint de connexion afin de se connecter avec ladite carte de circuit imprimé (202).

6. Appareil de stockage de mémoire à double interface (70 ; 500), comprenant :
un dispositif de connexion (100; 110; 300A) selon l'une des revendications 1 à 4 ;
un boîtier (113A ; 114), recevant et portant les composants suivants ;
une carte de circuit imprimé (202), étant agencée dans le boîtier (113A ; 114) et ayant une configuration de circuit de fils conducteurs ;
une matrice mémoire (160 ; 507), comprenant au moins un composant de mémoire et agissant comme un dispositif de sauvegarde de données ; et
un contrôleur à double interface (140 ; 506), modifiant des données sauvegardées dans une mémoire interne étant disposé dans le boîtier (113A; 114) étant prévu avec un circuit nécessaire pour effectuer la transmission et la transformation entre un signal d'interface USB et un signal de données et sauvegardant des données dans la matrice mémoire (160 ; 507) ;
un autre dispositif de connexion (400), exposant à l'extérieur du boîtier (113A ; 114), fournissant des fils pour se connecter avec la carte de circuit imprimé (202), ayant des trous de broche externes ou des broches de connexion pour s'engager avec une fente de prise d'un premier système ;
dans lequel ledit dispositif de connexion (100 ; 110 ; 300A), s'exposant vers l'extérieur du boîtier, produisant des joints afin de se connecter avec ladite carte de circuit imprimé (202), ayant des trous de broche ou des broches de connexion afin de s'engager avec une fente de prise d'un deuxième système.

7. Dispositif de connexion de signal électronique destiné à être inséré dans une fente de prise d'un connecteur USB, comprenant :
un dispositif de connexion (100; 110; 300A) selon l'une des revendications 1 à 4 ;
une carte de circuit imprimé (202), pourvue d'une configuration de circuit de signal USB sur elle ;
un boîtier (113A; 114), produisant une dimension pour être associé avec la carte imprimée (202) ; et
un ensemble de fils conducteurs métalliques (111), étant déposé et formé sur la carte de circuit (202) et exposant vers l'extérieur le dispositif de connexion (100 ; 110 ; 300A) une fois que ladite carte de circuit imprimé (102) est associée avec ledit boîtier (113A ; 114).

8. Dispositif de connexion de signal électronique selon la revendication 7, dans lequel ledit ensemble de fils conducteurs métalliques (111) comprend en outre un ensemble de fils conducteurs métalliques parallèles et la largeur de chacun desdits fils conducteurs et l'espacement entre deux fils conducteurs adjacents quelconques sont en conformité avec les spécifications d'une borne d'interface USB.

9. Appareil de stockage de mémoire (500) sans connecteur d'interface USB, qui peut être inséré dans une fente de prise d'un connecteur USB ou une prise d'interface qui a un ensemble de signaux USB, comprenant :
un dispositif de connexion (100; 110; 300A) selon l'une des revendications 1 à 4 ;
un boîtier (113A; 114), recevant les composants électroniques suivants et comportant une ouverture ;
une carte de circuit imprimé (202), pourvue d'une configuration de circuit avec des fils conducteurs nécessaires et ayant un ensemble de fils conducteurs métalliques s'exposant partiellement vers l'extérieur dudit boîtier (113A ; 114) ;
une matrice mémoire (503), comprenant au moins un composant de mémoire pour sauvegarder des données ;
un contrôleur USB (502 ; 509) modifiant des données dans ledit composant de mémoire en un signal en conformité avec une spécification d'interface USB et modifiant ledit signal USB en des données de telle manière à être sauvegardées dans ledit composant de mémoire et se connectant avec ladite matrice mémoire (503) afin de former un circuit.

10. Appareil de stockage de mémoire (500) selon la revendication 9, dans lequel ladite structure de connexion de ladite interface USB est ledit dispositif de connexion (100; 110; 300A) formé avec la partie de fils conducteurs métalliques de ladite carte de circuit imprimé (202).

11. Appareil de stockage de mémoire (500) selon la revendication 9 ou 10, dans lequel ledit contrôleur USB (509) fournit un dispositif de signalisation pour indiquer un statut de travail dudit appareil de stockage de mémoire (500).

12. Appareil de stockage de mémoire (500) selon la revendication 11, dans lequel ledit dispositif de signalisation comprend une lecture/écriture w/r ou une transmission d'un signal indiquant ledit statut de travail dudit appareil de stockage de mémoire (500).

13. Appareil de stockage de mémoire (500) selon la revendication 11 ou 12, dans lequel ledit dispositif de signalisation comprend un signal de transfert de courant P pour indiquer un statut de consommation de courant.

14. Appareil de stockage de mémoire à double interface (70 ; 500A) sans connecteur d'interface USB, qui peut être connecté avec le contact de la prise d'une prise de connecteur USB ou d'une prise d'interface qui a un ensemble de signaux USB, comprenant :
un dispositif de connexion (100; 110; 300A) selon l'une des revendications 1 à 4 ;
un boîtier (113A; 114) recevant les composants électroniques suivants, et comportant une ouverture ;
une carte de circuit imprimé (202), pourvue d'une configuration de circuit avec des fils conducteurs nécessaires et ayant un ensemble de partie de fils conducteurs métalliques s'exposant vers l'extérieur dudit boîtier (113A ; 114) ;
une matrice mémoire (160 ; 503 ; 507) comprenant au moins un composant de mémoire pour sauvegarder des données ;
un contrôleur à double interface (140 ; 506), modifiant des données dans le composant de mémoire en un signal en conformité avec une spécification d'interface USB et modifiant ledit signal USB en des données de telle manière à être sauvegardées dans le composant de mémoire et se connectant avec l'ensemble de matrice mémoire afin de former un circuit ; et
un ensemble d'autres dispositif de connexion (400) autre que ledit dispositif de connexion (100 ; 110 ; 300A).

15. Appareil de stockage de mémoire à double interface (70 ; 500A) selon la revendication 14, dans lequel ledit dispositif de connexion (100 ; 110 ; 300A) est formé avec la partie de fils conducteurs métalliques lorsque le boîtier (113A ; 114) est associé avec ladite carte de circuit imprimé (202) devant être insérée dans une prise USB standard et protéger ledit contrôleur à double interface et ledit composant de mémoire.

16. Appareil de stockage de mémoire à double interface (70 ; 500A) selon la revendication 14, dans lequel un dispositif de connexion identique à un connecteur d'interface de carte mémoire ou dispositif de connexion existant est formé avec ladite partie de fils métalliques conducteurs dès que ledit boîtier (113A ; 114) est associé avec ladite carte de circuit imprimé (202) devant être insérée dans une prise de carte mémoire existante et protéger ledit contrôleur à double interface et ledit composant de mémoire.

17. Appareil de stockage de mémoire à double interface (70 ; 500A) selon la revendication 14, dans lequel un dispositif de connecteur identique à une carte de mémoire existante est fixé à ladite carte de circuit imprimé (202) et s'expose vers l'extérieur dudit appareil de stockage de mémoire à double interface (70 ; 500A).

18. Appareil de stockage de mémoire à double interface (70 ; 500A) selon les revendications 14 à 17, dans lequel ledit appareil de stockage de mémoire (70 ; 500A) est muni d'un commutateur de lecture seule (73 ; 202C ; 202B) ou un dispositif situé à l'extérieur dudit appareil de manière extérieure pour empêcher l'écriture de données dans ledit appareil de stockage de mémoire (70 ; 500A) lorsqu'il est commuté vers un mode approprié.

19. Appareil de stockage de mémoire à double interface (70 ; 500A) selon les revendications 14 à 18, dans lequel un signal lumineux de signal (75 ; 114A) est monté de manière externe sur ledit appareil de stockage de mémoire (70 ; 500A), pour indiquer un statut de travail dudit appareil de stockage de mémoire (70 ; 500A).

20. Appareil de stockage de mémoire à double interface (70 ; 500A) selon les revendications 14 à 19, dans lequel un couvercle de protection amovible (71 ; 301) est prévu pour s'ajuster avec et protéger lesdites bornes métalliques (101 ; 111).

21. Appareil de stockage de mémoire (500) selon les revendications 9 à 13, dans lequel un couvercle de protection amovible (71 ; 301) est prévu pour s'ajuster avec et protéger lesdites bornes métalliques (101 ; 111).
